# FASCICULE DE BREVET EUROPEEN

(11) **EP 2 081 670 B1**
(45) Date de publication et mention de la délivrance du brevet: **26.09.2018**
(21) Numéro de dépôt: 07858610.4
(22) Date de dépôt: 17.10.2007
(51) Int. Cl.: B01J 8/00, B65G 69/04, G01F 23/284, G01S 13/89

(54) **SYSTEME DE DETERMINATION DU RELIEF D'UNE SURFACE DE REMPLISSAGE DE GRANULES DANS UN REACTEUR PETROCHIMIQUE**
SYSTEM ZUR BESTIMMUNG DES RELIEFS EINER OBERFLÄCHE ZUM FÜLLEN EINES PETROCHEMISCHEN REAKTORS MIT GRANULAT
SYSTEM FOR DETERMINING THE RELIEF OF A SURFACE FOR FILLING A PETROCHEMICAL REACTOR WITH GRANULES

(30) Priorité: 19.10.2006 FR 0654377
(43) Date de publication de la demande: 29.07.2009
(73) Titulaire: Crealyst, 72390 Semur En Vallon (FR)
(72) Inventeur: POUSSIN, Bernard, 78420 Carrieres Sur Seine (FR)
(74) Mandataire: Vallée-Thiollier, Clémence-Olivia Laure Marie
(86) Numéro de dépôt international: PCT/FR2007/052185
(87) Numéro de publication internationale: WO 2008/047050

(56) Documents cités:
- FR-A- 2 872 497
- FR-A1- 2 862 625
- US-A1- 2004 031 335
- US-A1- 2006 201 245
- US-A1- 2006 201 246

## Description

La présente invention concerne un système de détermination du relief d'une surface de remplissage de granulés dans un réacteur pétrochimique.

Dans la suite, on entendra par « granulés » tout type de particules solides divisées. On définit par ailleurs par « direction verticale » la direction de remplissage d'un réacteur pétrochimique, et par « plan horizontal » du réacteur pétrochimique un plan perpendiculaire à cette direction de remplissage.

L'invention s'applique au domaine de l'industrie pétrochimique. On sait qu'au cours de son raffinage, le pétrole subit des réactions chimiques, notamment dans un réceptacle appelé réacteur pétrochimique. Pour favoriser les réactions, le pétrole s'écoule dans le réacteur à travers un catalyseur prenant la forme de granulés, généralement des billes extrudées poreuses comprenant des composés métalliques. On notera que le réacteur pétrochimique fonctionne généralement à des pressions comprises entre 0 et 100 bars, et des températures comprises entre 100 et 500°C.

On sait que le catalyseur doit être remplacé lorsqu'il est usé, par exemple au bout de deux ans. Pour mettre en oeuvre ce remplacement, on vide tout d'abord le réacteur, puis on le remplit de catalyseur neuf, à l'aide d'un dispositif de remplissage de granulés tel que celui décrit dans le document FR 2 862 625. Ce dispositif de remplissage prend place dans l'ouverture de remplissage du réacteur, agencée généralement dans le haut et au centre du réacteur.

On sait que, lors du remplissage des granulés dans le réacteur pétrochimique, la surface de remplissage (c'est-à-dire la surface supérieure délimitant le tas de granulés versés) doit être la plus plane et horizontale possible. En effet, si au cours du remplissage des granulés, la surface de remplissage présente un relief, par exemple en formant un cône, il peut se produire une ségrégation des granulés, c'est à dire que les plus gros granulés de la surface du cône glissent vers les parties plus basses du cône, par effet de gravité. Du fait de cette ségrégation des granulés, le pétrole qui s'écoule ensuite dans le réacteur pétrochimique a tendance à utiliser un passage préférentiel, si bien qu'une partie des granulés catalytiques réagit davantage que les autres.

Or, on sait que les granulés catalytiques coûtent particulièrement cher, si bien que l'on cherche à les remplacer le moins souvent possible.

C'est pourquoi on cherche à faire réagir les granulés catalytiques de façon homogène, sans produire de passage préférentiel du pétrole. A cet effet, il est nécessaire de remplir les granulés dans le réacteur sans créer de cône sur la surface de remplissage.

Afin de surveiller que la surface de remplissage est plane et horizontale, et éventuellement de la corriger, on peut agencer sur le réacteur un système de détermination du relief de la surface de remplissage des granulés.

On connaît déjà dans l'état de la technique, notamment du document US 2004/0031335, un système de détermination du relief d'une surface de remplissage de granulés dans un silo de stockage, comprenant un émetteur, tel qu'un rayon laser, positionné au-dessus de la surface de remplissage, dans la partie supérieure centrale du silo, de façon à émettre un signal vers différents points de cette surface et ainsi déterminer la hauteur de ces différents points. Afin de balayer toute la surface de remplissage, cet émetteur comporte des moyens de rotation sur lui-même. Un tel système permet ainsi d'obtenir un relevé topographique de la surface de remplissage. On notera que ce système est utilisé dans un silo de stockage dans le domaine agroalimentaire, réceptacle n'ayant pas les mêmes contraintes de configuration et ni les mêmes conditions de fonctionnement qu'un réacteur pétrochimique.

Le problème consiste en ce que, au cours du remplissage de granulés dans un réacteur pétrochimique, la partie supérieure centrale du réacteur est occupée par le dispositif de remplissage. Il en résulte que, pour obtenir un relevé topographique satisfaisant de toute la surface de remplissage, il serait nécessaire de disposer plusieurs émetteurs dans la partie supérieure du réacteur, de façon à les monter excentrés par rapport au centre du réacteur, par exemple plusieurs émetteurs diamétralement opposés.

Bien que cette solution permettrait d'avoir des mesures précises, elle nécessiterait plusieurs émetteurs, ce qui est coûteux. En outre, comme ces émetteurs seraient relativement éloignés de l'ouverture de remplissage du réacteur, leur montage sur le réacteur serait compliqué.

La présente invention vise à fournir un système permettant d'obtenir un relevé topographique précis de la surface de remplissage dans un réacteur pétrochimique, sans pour autant utiliser plusieurs émetteurs, même lorsque la partie supérieure du réacteur est occupée par un dispositif de remplissage.

A cet effet, l'invention a pour objet un système de détermination de relief utilisable pour déterminer le relief d'une surface de remplissage de granulés dans un réacteur pétrochimique, la direction de remplissage du réacteur définissant une direction verticale, le réacteur comprenant un axe vertical central, le système comprenant un émetteur configuré pour être positionné au-dessus de la surface de remplissage de façon à émettre un signal vers différents points de cette surface, caractérisé en ce que le système comprend des moyens de déplacement de tout l'émetteur selon un angle dans le plan horizontal par rapport à l'axe central du réacteur supérieur à 60°, le système de détermination comprenant des moyens de fixation, de préférence amovibles, sur un dispositif de remplissage de granulés dans le réacteur.

On notera que le « déplacement » de l'émetteur correspond à un déplacement de tout l'émetteur, il comprend ainsi une translation ou une rotation par rapport à un axe extérieur à l'émetteur, mais se distingue d'une rotation de l'émetteur sur lui-même.

Ainsi, grâce à ces moyens de déplacement, il est possible de déplacer tout l'émetteur sur une distance relativement grande de façon qu'il puisse prendre plusieurs positions par rapport à l'axe central, par exemple des positions diamétralement opposées. Comme ordre de grandeur de la distance de déplacement de l'émetteur, on peut citer que, si le réacteur est cylindrique, l'émetteur peut être déplacé sur une distance supérieure à la valeur du rayon du réacteur. Il en ressort qu'un seul émetteur est suffisant pour obtenir un relevé topographique de la surface de remplissage, malgré la présence d'un dispositif de remplissage dans la partie supérieure centrale du réacteur. Ainsi, l'invention est particulièrement intéressante si le système de détermination est destiné à être monté dans un réacteur muni d'un dispositif de remplissage dans sa partie centrale supérieure.

En outre, on obtient une détermination plus précise du relief. En effet, l'émetteur, au cours de son déplacement, peut prendre une grande quantité de positions différentes. Or, dans le cas où la surface de remplissage n'est pas plane, plus l'émetteur peut prendre de positions différentes, plus il peut varier les angles de visée du relief, et donc déterminer sa forme exacte.

Par ailleurs, dans le cas où la détermination du relief a lieu au cours du remplissage du réacteur, le dispositif de remplissage peut constituer un obstacle à la visée du relief, surtout que l'émetteur doit être positionné plus haut que le dispositif de remplissage, afin de ne pas être gêné par la pluie de granulés. Grâce à son déplacement sur une grande distance, l'émetteur peut atteindre des parties de la surface qui étaient cachées par le dispositif de remplissage dans une position précédente.

De plus, les moyens de déplacement de l'émetteur permettent de rapporter le système de détermination sur des réacteurs de dimensions variées, du fait que l'on peut adapter la distance de déplacement à la dimension du réacteur. Cet avantage est particulièrement intéressant car il permet d'utiliser le même système de détermination sur une grande diversité de réacteurs, ce qui est économique puisqu'il arrive qu'un réacteur ne soit rechargé que tous les deux ou trois ans.

Enfin, grâce aux moyens de fixation, le montage de l'émetteur sur le réacteur est particulièrement aisé, puisqu'il suffit de le monter sur le dispositif de remplissage, sans avoir à accéder à des parties peu accessibles de l'intérieur du réacteur. De préférence, ces moyens de fixation sont amovibles, si bien que l'on peut rapporter le système de détermination sur différents dispositifs de remplissage, et donc sur différents réacteurs

De préférence, pour faciliter les mesures, le déplacement de l'émetteur a lieu dans un plan horizontal du réacteur.

Un système de détermination de relief peut en outre comporter l'une ou plusieurs des caractéristiques suivantes :
- L'émetteur est un émetteur/récepteur, en particulier un radar. L'utilisation du radar est particulièrement avantageuse, du fait qu'il est adapté à la prise de mesures dans un réacteur en cours de remplissage de granulés, c'est-à-dire dans un environnement chargé en poussières ou en particules fines en suspension. En outre, il est intéressant d'utiliser un émetteur qui joue également le rôle de récepteur, de façon à diminuer le nombre de composants dans le réacteur.
- Le système comporte en outre des moyens de rotation de l'émetteur sur lui-même. Grâce à cette rotation de l'émetteur sur lui-même, on améliore encore la précision du système de détermination. Les moyens de rotation ont de préférence un ou plusieurs axes de rotation horizontaux. Ainsi, non seulement l'émetteur peut se déplacer sur une grande distance, mais son inclinaison par rapport à la surface de remplissage peut en outre changer.
- Les moyens de déplacement permettent un déplacement de l'émetteur selon un angle de 360° par rapport à l'axe central du réacteur, c'est-à-dire que l'émetteur est capable de faire tout le tour de l'axe central, pour un meilleur relevé topographique de la surface de remplissage.
- Le système comporte des moyens électriques d'entraînement des moyens de déplacement et/ou de rotation de l'émetteur. De tels moyens peuvent être automatiques ou commandés manuellement depuis un poste de contrôle distant du réacteur pétrochimique.
- Les moyens de déplacement comprennent des moyens rectilignes de déplacement, notamment un rail de guidage de l'émetteur. Dans un réacteur cylindrique, ces moyens rectilignes peuvent, par exemple, être positionnés selon deux cordes horizontales parallèles du réacteur.
- Les moyens de déplacement comprennent des moyens de rotation de l'émetteur autour de l'axe central du réacteur, de préférence autour d'un dispositif de remplissage de granulés dans le réacteur. Ainsi, le système de détermination se déplace de manière à décrire un cercle autour du dispositif de remplissage, ce qui améliore la précision des mesures. Ces moyens de rotation peuvent éventuellement prendre la forme d'un rail de guidage circulaire. La rotation autour du dispositif de remplissage est particulièrement intéressante puisqu'elle permet de positionner l'émetteur dans un plan horizontal de même hauteur que le dispositif de remplissage, si bien que l'émetteur n'est pas gêné par la pluie de granulés lors du remplissage.
- Le système de détermination comporte un bras de pivotement dont une extrémité est reliée à l'émetteur, et dont l'extrémité opposée est destinée à être reliée à un dispositif de remplissage de granulés. Ce bras de pivotement constitue un moyen simple pour effectuer la rotation. En outre, ce bras constitue un moyen de fixation du système de détermination sur le dispositif de remplissage du réacteur, sans qu'un opérateur ait besoin d'aller fixer des éléments à l'intérieur du réacteur.

L'invention concerne également un ensemble d'un dispositif de remplissage de granulés dans un réacteur pétrochimique et d'un système de détermination du relief de la surface de remplissage des granulés dans ce réacteur, tel que décrit ci-dessus.

L'invention concerne enfin un procédé de montage d'un ensemble tel que défini ci-dessus, au cours duquel on monte tout d'abord le dispositif de remplissage de granulés dans le réacteur, puis on rapporte le système de détermination sur ce dispositif de remplissage. Ainsi, on peut monter le système de détermination, qui peut être encombrant, après le montage du dispositif de remplissage sur le réacteur, alors que ce dispositif est généralement encombrant, d'autant plus qu'il est disposé en regard de l'ouverture de remplissage du réacteur.

L'invention sera mieux comprise à la lecture de la description qui va suivre, donnée uniquement à titre d'exemple et faite en se référant aux dessins dans lesquels :
- la figure 1 est une vue en coupe d'un réacteur pétrochimique muni d'un système de détermination de relief selon un premier mode de réalisation de l'invention ;
- la figure 2 est une vue en coupe selon la ligne II-II de la figure 1 ;
- la figure 3 est une vue agrandie du système de la figure 1 ;
- la figure 4 est une vue en perspective de moyens de déplacement et de moyens de rotation du système de la figure 1 ;
- la figure 5 est une vue similaire à celle de la figure 2 d'un système de détermination de relief selon un second mode de réalisation de l'invention.

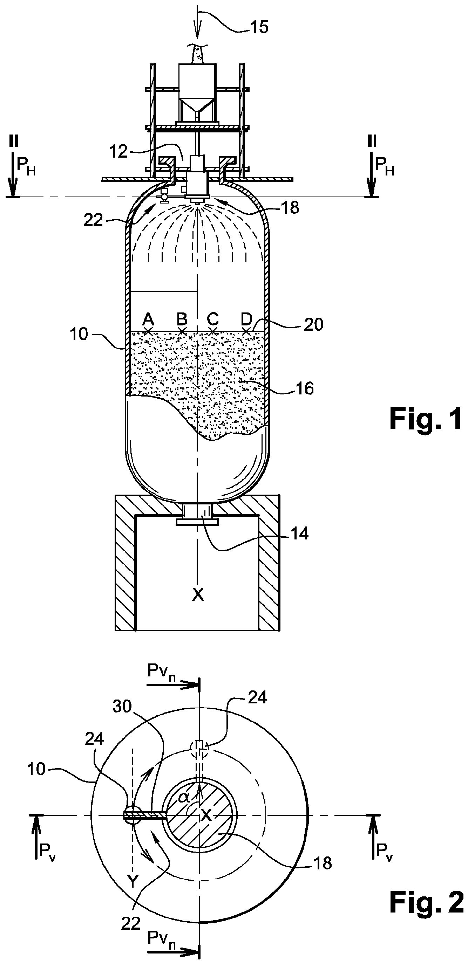

Au cours d'un procédé de raffinage, le pétrole s'écoule dans un réacteur pétrochimique 10, représenté sur la figure 1, de forme générale cylindrique. Le réacteur 10 comprend une ouverture de remplissage 12 et une ouverture d'évacuation 14. Le réacteur 10 comprend un axe vertical central X, et est rempli selon une direction de remplissage représentée par la flèche 15.

Avant que le pétrole ne s'écoule dans le réacteur 10, ce dernier est rempli d'un catalyseur 16 formé de granulés, par exemple des billes extrudées poreuses comprenant du métal. Les granulés 16 sont remplis à l'aide d'un dispositif de remplissage 18, similaire à celui décrit dans le document FR 2 862 625, de la façon la plus homogène possible, en dispersant les granulés sous forme de pluie. Le dispositif de remplissage 18 est suspendu dans le réacteur à l'aide de pieds verticaux 19, rattachés à un bâti extérieur.

Afin de surveiller que la surface 20 de remplissage des granulés est plane et horizontale, on rapporte sur le dispositif de remplissage 18 un système 22 de détermination du relief de la surface 20, selon l'invention. Ce système 22, relié à un système de traitement, a pour fonction de déterminer si la surface de remplissage 20 comprend des discontinuités de remplissage, tels que des cônes.

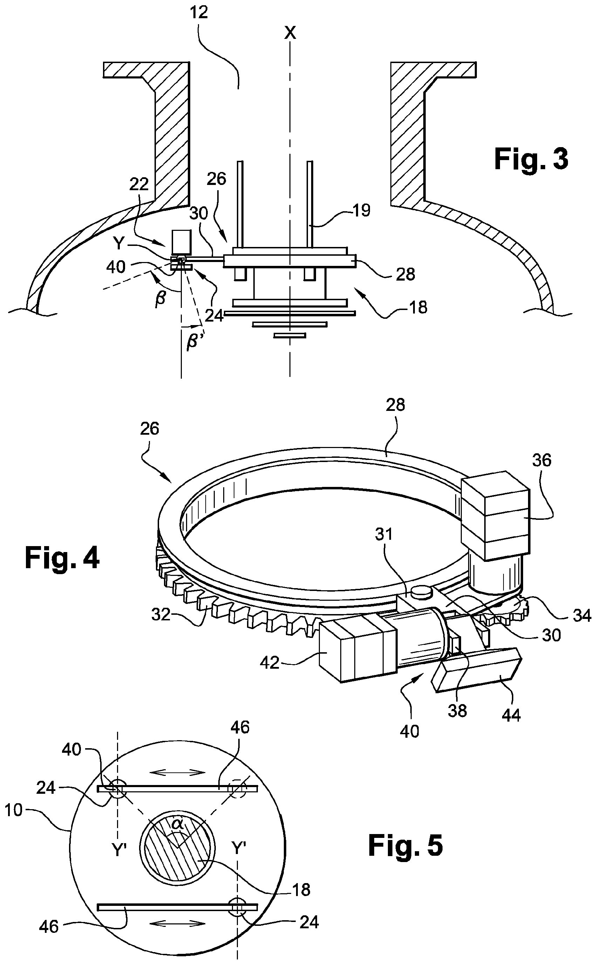

Comme on peut le voir sur la figure 3, le système 22 comprend un émetteur 24 plus précisément un émetteur/récepteur composé d'un radar. Ce radar est capable de prendre des mesures sur des distances allant jusqu'à 70 mètres.

Le radar est positionné au-dessus de la surface de remplissage 20, de façon à émettre des ondes électromagnétiques vers différents points de cette surface, par exemple les points A, B, C, D, et ainsi permettre de déterminer leur hauteur dans le réacteur.

Le système de détermination 22 comporte en outre des moyens 26 de déplacement du radar 24, représentés sur la figure 4. Ces moyens 26 comprennent un rail circulaire 28, rapporté autour du dispositif de remplissage 18, et un bras de pivotement 30, monté perpendiculairement à l'axe central X du réacteur. Le bras de pivotement 30 comporte une extrémité 31 montée rotative sur le rail circulaire 28. La rotation est mise en oeuvre au moyen d'une crémaillère 32 prévue à la périphérie du rail 28, coopérant avec un pignon 34 solidaire du bras de pivotement 30, le pignon 34 étant entraîné par un moteur électrique 36. L'extrémité 38 du bras de pivotement 30, opposée à l'extrémité 31, est reliée au radar 24.

Le système de détermination 22 comporte par ailleurs des moyens 40 de rotation du radar 24 sur lui-même. Ces moyens comprennent un moteur électrique 42 entraînant le radar, symbolisé par la plaque 44 sur la figure 4. L'axe de rotation Y du radar est horizontal, comme on peut le voir sur la figure 2, et autorise une rotation du radar dans un plan vertical P_{V}, plus précisément dans un plan radial, c'est-à-dire qui passe par l'axe central X du réacteur.

Le fonctionnement du système de détermination de relief 22 va à présent être décrit.

Au cours du remplissage du réacteur 10, le radar 24 est dans une première position, schématisée en traits pleins sur la figure 2. Ce radar 24 émet des signaux vers différents points A, B, C, D de la surface de remplissage 20, qu'il peut atteindre grâce aux moyens de rotation 40. Ainsi, dans cette première position, le radar 24 peut tourner autour de l'axe Y pour prendre différentes inclinaisons, telles que les inclinaisons d'angle β (bêta) et β' illustrées sur la figure 3. Les angles β et β' peuvent varier entre 0 et 80°. En conséquence, le radar 24 peut prendre une série de mesures, afin de déterminer la hauteur des points de la surface de remplissage situés dans le plan vertical P_{V1}.

Une fois que le radar 24 a balayé les points de la surface de remplissage dans le plan P_{V}, les moyens de déplacement 26 sont déclenchés, de façon à déplacer le radar 24 selon un certain angle α (alpha) par rapport à l'axe X. Ainsi, l'émetteur 24 peut se déplacer dans le plan horizontal P_{H}, visible sur la figure 1, de façon à prendre une pluralité de positions autour du dispositif de remplissage 18, en faisant varier les valeurs de l'angle α. Chaque fois que le radar 24 change de position, il peut prendre des mesures dans le plan vertical P_{Vn} correspondant, grâce à sa rotation autour des moyens 40.

Comme on peut le voir sur la figure 2, où le radar 24 est dans une n-ième position, illustrée en pointillés, correspondant à un angle α d'une valeur de 90°, le radar 24 peut se déplacer sur de grandes distances, si bien qu'il peut effectuer des mesures qui n'étaient pas accessibles depuis la première position, notamment en raison de la présence du dispositif de remplissage 18 au centre du réacteur. En outre, depuis cette n-ième position, le radar 24 peut visualiser du relief de la surface de remplissage selon un angle de visée totalement différent de celui de la première position.

Les moyens 26 permettent de déplacer le radar 24 selon un angle de 360° autour de l'axe central X, si bien que, une fois que le radar 24 a fait le tour de l'axe, en prenant une pluralité de positions autour de cet axe, on obtient un relevé topographique particulièrement précis de la surface de remplissage 20 du réacteur.

Les mesures prises par le système de détermination peuvent être continues ou périodiques. Elles sont transmises en temps réel à un poste de contrôle et sont traitées de façon à pouvoir obtenir le relevé topographique de la surface de remplissage 20. Grâce à ce relevé topographique, il est possible, lorsque l'on a déterminé un relief sur la surface de remplissage 20, de modifier les paramètres de remplissage afin de corriger ce relief et d'obtenir une surface plane horizontale.

En outre, il est possible d'assurer un historique du remplissage du réacteur, que l'on pourra consulter plus tard si l'on veut vérifier comment le réacteur a été rempli.

Le procédé de montage du dispositif de remplissage 18 et du système de détermination 22 dans le réacteur 10 va à présent être décrit.

On monte tout d'abord le dispositif de remplissage 18 dans le réacteur, supporté par les pieds 19. Puis, on rapporte le système de détermination 22 sur ce dispositif 18. De préférence, on le rapporte de façon amovible, par exemple à l'aide de clips, afin de pouvoir le démonter facilement et le rapporter sur un autre réacteur.

Selon un procédé de montage légèrement différent, on monte tout d'abord le rail circulaire 28 sur le dispositif de remplissage 18. Puis, on monte ce dispositif sur le réacteur supporté par les pieds 19. Ensuite, on rapporte le radar 24, relié au bras pivotant 30, sur le rail circulaire 28, de préférence en le fixant de façon amovible avec des clips. Pour rapporter le bras 30 et le radar 24, il est avantageux de les introduire dans l'ouverture de remplissage 12 perpendiculairement à leur position finale, c'est-à-dire que le bras pivotant 30 est parallèle à l'axe vertical X, ce qui diminue l'espace nécessaire pour le monter lorsque le dispositif de remplissage 18 prend trop de place dans l'ouverture de remplissage 12. Puis, une fois que le radar 24 et le bras pivotant 30 sont dans la cuve du réacteur, on peut les orienter perpendiculairement à l'axe X, de façon que le bras 30 se situe dans le plan horizontal P_{H}, par exemple dans la première position décrite ci-dessus.

Un autre mode de réalisation du système selon l'invention est illustré sur la figure 5. Les éléments analogues à ceux des figures 1 à 4 sont désignés par des références identiques. Les moyens de déplacement 26 comprennent des moyens rectilignes 46, alignés avec deux cordes de la section circulaire du réacteur 10. Les moyens 46 sont composés d'un rail de guidage, fixe par rapport au réacteur, coopérant avec un moyen de guidage complémentaire du radar 24. De même que le premier mode de réalisation, le système de détermination comporte des moyens de rotation 40 du radar autour d'un axe Y'. Ainsi, le radar 24, dans chacune de ces positions, peut être incliné dans un plan vertical P_{Vn} pour balayer la surface de remplissage dans ce plan.

Le procédé de fonctionnement du sytème est similaire à celui du premier mode de réalisation.

On notera enfin que l'invention n'est pas limité aux modes de réalisations précédemment décrits.

Parmi les avantages de l'invention, on notera qu'il est possible de déterminer le relief de la surface de remplissage 20, sans pour autant avoir à faire entrer un opérateur dans le réacteur, ce qui lui évite d'avoir à travailler dans un milieu poussiéreux et chimique.

On notera en outre que le montage du système de détermination dans le réacteur est particulièrement rapide, tout en disposant d'un système fournissant des mesures de distance particulièrement fiables.

Enfin, de par sa simplicité, sa légèreté et sa compacité, le système de détermination s'adapte à divers types de dispositif de remplissage, et peut être mise en oeuvre dans les espaces les plus restreints.

## Revendications

1. Système de détermination (22) de relief utilisable pour déterminer le relief d'une surface de remplissage (20) de granulés dans un réacteur pétrochimique (10), la direction de remplissage (15) du réacteur définissant une direction verticale, le réacteur comprenant un axe vertical central (X), le système comprenant un émetteur (24) configuré pour être positionné au-dessus de la surface de remplissage (20) de façon à émettre un signal vers différents points de cette surface, **caractérisé en ce que** le système comprend des moyens (26) de déplacement de tout l'émetteur (24) selon un angle (α - alpha) dans un plan horizontal par rapport à l'axe central (X) du réacteur supérieur à 60°, le système de détermination comprenant des moyens de fixation, de préférence amovibles, sur un dispositif (18) de remplissage de granulés dans le réacteur (10).

2. Système selon la revendication 1, dans lequel l'émetteur est un émetteur/récepteur, en particulier un radar (24).

3. Système selon la revendication 1 ou 2, comportant en outre des moyens (40) de rotation de l'émetteur (24) sur lui-même.

4. Système selon l'une ou quelconque des revendications 1 à 3, dans lequel les moyens de déplacement (26) permettent un déplacement de l'émetteur selon un angle (a - alpha) de 360° par rapport à l'axe central du réacteur.

5. Système selon l'une ou quelconque des revendications 1 à 4, comportant des moyens électriques (36, 42) d'entraînement des moyens de déplacement (26) et/ou de rotation (40) de l'émetteur.

6. Système selon l'une ou quelconque des revendications 1 à 5, dans lequel les moyens de déplacement (26) comprennent des moyens rectilignes (46) de déplacement, notamment un rail de guidage de l'émetteur.

7. Système selon l'une ou quelconque des revendications 1 à 6, dans lequel les moyens de déplacement (26) comprennent des moyens (28, 30) de rotation de l'émetteur autour de l'axe central (X) du réacteur, de préférence autour d'un dispositif (18) de remplissage de granulés dans le réacteur.

8. Système selon la revendication 7, comportant un bras de pivotement (30) dont une extrémité (38) est reliée à l'émetteur (24), et dont l'extrémité opposée (31) est destinée à être reliée à un dispositif (18) de remplissage de granulés

9. Ensemble d'un dispositif (18) de remplissage de granulés dans un réacteur pétrochimique et d'un système (22) de détermination du relief de la surface de remplissage des granulés dans ce réacteur, selon l'une ou quelconque des revendications 1 à 8.

10. Procédé de montage d'un ensemble selon la revendication 9 sur un réacteur, au cours duquel on monte tout d'abord le dispositif (18) de remplissage de granulés dans le réacteur, puis on rapporte le système de détermination (22) sur ce dispositif de remplissage.

## Patentansprüche

1. System zur Profilbestimmung (22) zur Bestimmung des Profils einer Oberfläche einer Granulatbefüllung (20) in einem petrochemischen Reaktor (10), wobei die Richtung der Befüllung (15) des Reaktors eine vertikale Richtung definiert, wobei der Reaktor eine vertikale Mittelachse (X) umfasst, wobei das System einen Emitter (24) umfasst, der dazu ausgestaltet ist, derart über der Oberfläche der Füllung (20) positioniert zu werden, dass er ein Signal in Richtung verschiedener Punkte dieser Oberfläche emittiert, dadurch charakterisiert, dass das System Fortbewegungsmittel (26) von jedem Emitter (24) in einem Winkel (α - alpha) von größer als 60° in einer horizontalen Ebene bezogen auf die Mittelachse (X) des Reaktors umfasst, wobei das Bestimmungssystem vorzugsweise abnehmbare Befestigungsmittel auf einer Granulat-Befüllungsvorrichtung (18) in dem Reaktor (10) umfasst.

2. System nach Anspruch 1, in dem der Emitter ein Emitter/Empfänger ist, insbesondere ein Radar (24).

3. System nach Anspruch 1 oder 2, das ferner Drehmittel (40) des Emitters (24) auf diesem selbst umfasst.

4. System nach einem der Ansprüche 1 bis 3, in dem die Fortbewegungsmittel (26) eine Verlagerung des Emitters in einem Winkel (α - alpha) von 360° bezogen auf die Mittelachse des Reaktors ermöglichen.

5. System nach einem der Ansprüche 1 bis 4, das elektrische Mittel (36, 42) zum Antrieb der Fortbewegungsmittel (26) und/oder zur Drehung (40) des Emitters umfasst.

6. System nach einem der Ansprüche 1 bis 5, in dem die Fortbewegungsmittel (26) geradlinige Fortbewegungsmittel (46) umfassen, insbesondere eine Führungsschiene des Emitters.

7. System nach einem der Ansprüche 1 bis 6, in dem die Fortbewegungsmittel (26) Drehmittel (28, 30) des Emitters um die Mittelachse (X) des Reaktors umfassen, vorzugsweise um eine Granulat-Befüllungsvorrichtung (18) in dem Reaktor.

8. System nach Anspruch 7, das einen Schwenkarm (30) umfasst, dessen einer Endpunkt (38) mit dem Emitter (24) verbunden ist und dessen anderer Endpunkt (31) zum Verbinden mit einer Granulat-Befüllungsvorrichtung (18) ausgelegt ist.

9. Baugruppe einer Granulat-Befüllungsvorrichtung (18) in einem petrochemischen Reaktor und ein System (22) zur Profilbestimmung der Oberfläche einer Granulatbefüllung in diesem Reaktor, nach einem der Ansprüche 1 bis 8.

10. Montageverfahren einer Baugruppe nach Anspruch 9 auf einem Reaktor, in dessen Verlauf zuerst die Granulat-Befüllungsvorrichtung (18) in dem Reaktor montiert wird und dann das Bestimmungssystem (22) auf dieser Befüllungsvorrichtung angebracht wird.

## Claims

1. A system (22) for determining relief usable for determining the relief of a granule filling surface (20) in a petrochemical reactor (10), the filling direction (15) in which the reactor is filled defining a vertical direction, the reactor having a central vertical axis (X), the system including a transmitter (24) configured to be positioned above the filling surface (20) in such a manner as to transmit a signal to various points of said surface, said system being **characterized in that** it includes shift means (26) for shifting the transmitter (24) as a whole relative to the central axis (X) in an horizontal plane of the reactor through an angle (α - alpha) that is greater than 60°, the system for determining relief including fastener means for fastening it to a filler device (18) for filling the reactor (10) with granules, preferably releasable fastener means.

2. A system according to claim 1, wherein the transmitter is a transceiver, and in particular a radar transceiver (24) .

3. A system according to claim 1 or 2, further including means (40) for pivoting the transmitter (24) about its own axis.

4. A system according to any one of claims 1 to 3, wherein the shift means (26) make it possible to shift the transmitter through an angle (α - alpha) of 360° about the central axis of the reactor.

5. A system according to any one of claims 1 to 4, including electric drive means (36, 42) for driving the means (26) for shifting and/or the means (40) for pivoting the transmitter.

6. A system according to any one of claims 1 to 5, wherein the shift means (26) comprise rectilinear shift means (46), in particular a guide rail for guiding the transmitter.

7. A system according to any one of claims 1 to 6, wherein the shift means (26) comprise means (28, 30) for shifting the transmitter in rotation about the central axis (X) of the reactor, preferably about a device (18) for filling the reactor with granules.

8. A system according to claim 7, including a pivot arm (30) having one end (38) connected to the transmitter (24) and having its opposite end (31) serving to be connected to a granule filler device (18).

9. An assembly made up of a filler device (18) in a petrochemical reactor for filling said reactor with granules and of a determination system (22) for determining relief on the granule filling surface in the reactor according to any one of claims 1 to 8.

10. A method of mounting an assembly according to claim 9 on a reactor, during which firstly the device for filling the reactor with granules (18) is mounted in the reactor, and then the determination system (22) is mounted on said filler device.
